# EUROPEAN PATENT SPECIFICATION

(11) **EP 3 153 824 B1**
(45) Date of publication and mention of the grant of the patent: **01.08.2018**
(21) Application number: 16191352.0
(22) Date of filing: 29.09.2016
(51) Int. Cl.: G01F 1/115, G01F 15/12, G01F 15/06

(54) **WATER TREATMENT ARMATURE**
WASSERAUFBEREITUNGSARMATUR
ROBINETTERIE DE TRAITEMENT DE L'EAU

(30) Priority: 05.10.2015 EP 15188338
(43) Date of publication of application: 12.04.2017
(73) Proprietor: Honeywell Technologies Sarl, 1180 Rolle (CH)
(72) Inventor: Vechet, Jiri, 63800 Brno (CZ); Kusala, Petr, 68201 Vyskov (CZ); Malachovsky, Roman, 66462 Hrusovany u Brna (CZ); Kalvoda, Pavel, 66453 Ujezd u Brna, N/A (CZ); Tomanek, Stanislav, 68605 Uherske Hradiste (CZ)
(74) Representative: Sturm, Christoph

(56) References cited:
- US-A- 4 275 291
- US-A- 5 935 426
- US-A1- 2008 150 750
- US-A1- 2012 210 708

## Description

The present patent application relates to a water treatment armature for the handling of water.

In fluid systems like potable water systems it is desired to measure the fluid flow through the fluid system or through components of fluid system like through armatures. For the time being such a fluid flow measurement is provided by separate devices. Such devices use for the fluid flow measurement a rotatable element positioned in the fluid flow, whereby the number of rotations per time unit or the rotation speed of the rotatable element is used to measure the fluid flow. It is known that such fluid flow measuring devices make use of a magnetic rotatable element, wherein the rotation of the rotatable, magnetic element generates a magnetic field which is detected by a sensing coil. The magnetic field induces an electrical current signal in the sensing coil, namely an alternate current signal, wherein the frequency of said alternate current signal is determined. The frequency of the electrical current signal depends from the fluid flow.

US 5 935 426 A discloses a water treatment armature according to the preamble of present independent claim 1. Against this background, a novel water treatment armature for the handling of water according to claim 1 is provided.

The water treatment armature for the handling of water comprises a housing, a water treatment element, a fluid flow measuring device and a fluid flow guiding insert.

The housing of the water treatment armature comprises an inlet for the fluid, an outlet for the fluid being coaxial with the inlet, and a flow channel for the fluid extending between the inlet and the outlet. The water treatment element is connected between the inlet and the outlet of the housing. The fluid flow measuring device of the water treatment armature is configured to measure the fluid flow through the flow channel.

The fluid flow measuring device comprises a rotatable, magnetic element, wherein the rotatable, magnetic element is positioned in the fluid flow, wherein the rotation of the rotatable, magnetic element depends from the fluid flow, and wherein the rotation of the rotatable, magnetic element generates a magnetic field. The fluid flow measuring device comprises further at least one sensing coil pair having a first sensing coil and a second sensing coil sensing the magnetic field that depends from the fluid flow.

The fluid flow guiding insert of the water treatment armature is a monobloc or monolithic element and is configured to guide the fluid flow along the rotatable, magnetic element of the fluid flow measuring device. The monobloc fluid flow guiding insert is positioned with a recess of the housing. The rotatable, magnetic element of the fluid flow measuring device is positioned within a recess of the monobloc fluid flow guiding insert. The monobloc fluid flow guiding insert is configured to guide the fluid flow from the inlet of the housing towards the water treatment element, then from the water treatment element towards the rotatable, magnetic element of the fluid flow measuring device, and then from the rotatable, magnetic element towards the outlet of the housing.

The monobloc fluid flow guiding insert is configured to guide the fluid flow first from the inlet of the housing towards the water treatment element, namely by having a first flow channel section configured to guide the fluid flow from the inlet of the housing towards the water treatment element. The monobloc fluid flow guiding insert is further configured to guide the fluid flow then from the water treatment element towards the rotatable, magnetic element of the fluid flow measuring device, namely by having a second flow channel section configured to guide the fluid flow from the water treatment element towards the rotatable, magnetic element of the fluid flow measuring device. The monobloc fluid flow guiding insert is further configured to guide the fluid flow then from the rotatable, magnetic element towards the outlet of the housing, namely by having a third flow channel section configured to guide the fluid flow from the rotatable, magnetic element of the fluid flow measuring device towards the outlet of the housing.

The above defined water treatment armature for the handling of water comprises an integrated fluid flow measuring device allowing a reliable fluid flow measuring. The above defined water treatment armature makes is superfluous to use separate devices for the fluid flow measurement. This allows a more compact design of fluid systems. Due to the integration of the fluid flow measuring device into the water treatment armature, no separate room is needed for the installation of a fluid flow measuring device. The monobloc fluid flow guiding insert is simple and provides a reliable water guiding function for the fluid flow from the inlet of the housing towards the water treatment element, then from the water treatment element towards the rotatable, magnetic element of the fluid flow measuring device, and then from the rotatable, magnetic element towards the outlet of the housing. It is possible to guide the fluid flow first to the water treatment element and afterward to the rotatable, magnetic element of the fluid flow measuring device. The monobloc fluid flow guiding insert is compact and requires less space.

The magnetic element of the fluid flow measuring device gets in contact only with water treated by the water treatment element. This allows a more reliable fluid flow measurement. Further on, the life time of the rotatable, magnetic element of the fluid flow measuring device can be increased.

Preferably, an upstream subsection of the first flow channel section receiving the water from the inlet is coaxial with the inlet of the housing. Said upstream subsection of the first flow channel section receives the water deflectionless from the inlet of the housing. A downstream subsection of the first flow channel section guiding the water towards the water treatment element is perpendicular to said upstream subsection. Said downstream subsection of the first flow channel section receives the water with a 90 degrees deflection from the upstream subsection of the first flow channel section. Said downstream subsection of the first flow channel section guides the water to the water treatment element. The second flow channel section runs parallel to the downstream subsection of the first flow channel section. Said second flow channel section receives the water from the water treatment element. An upstream subsection of the third flow channel section is coaxial with the downstream subsection of the first flow channel section. Said upstream subsection of the third flow channel section receives the water with a 180 degrees deflection from the second flow channel section. A downstream subsection of the third flow channel section guiding the water towards the outlet is coaxial with the outlet. Said downstream subsection of the third flow channel section receives the water with a 90 degrees deflection from the upstream subsection of the third flow channel section. The outlet of the housing receives the water deflectionless from the downstream subsection of the third flow channel section. This provides a reliable water guiding fuction with a minimal required space.

The upstream subsection of the third flow channel section provides the recess of the fluid flow guiding insert in which the rotatable, magnetic element of the fluid flow measuring device is positioned. This provides a further reduction of the required space.

The fluid flow guiding insert comprises a body having a first tube-like body section with a radial inner wall and a second tube-like body section with a radial outer wall. The upstream subsection of the first flow channel section extends in radial direction through the radial outer wall of the second tube-like body section and through the radial inner wall of the first tube-like body section, and the downstream subsection of the first flow channel section extends in axial direction inwardly from the radial inner wall of the first tube-like body section. The second flow channel section extends in axial direction, namely in axial direction between the radial inner wall of the first tube-like body section and the radial outer wall of the second tube-like body section. The upstream subsection of the third flow channel section extends in axial direction inwardly from the radial inner wall of the first tube-like body section. The downstream subsection of the third flow channel section extends in radial direction through the radial inner wall of the first tube-like body section and through the radial outer wall of the second tube-like body section. Such a fluid flow guiding insert is simple and provides the preferred fluid flow from the inlet to the outlet of the armature.

Preferred developments of the invention are provided by the dependent claims and the description which follows. Exemplary embodiments are explained in more detail on the basis of the drawing, in which:
- Figure 1: shows a first perspective view of an armature for a fluid system comprising a fluid flow measuring device having a user interface assembled to the armature in a first orientation;
- Figure 2: shows a second perspective view of the armature of Figure 1 with the user interface being removed;
- Figure 3: shows a third perspective view of the armature of Figure 1 and 2 with the user interface assembled to the armature in a second orientation;
- Figure 4: shows a fourth perspective view of the armature of Figures 1 to 3 with the user interface being removed;
- Figure 5: shows a cross section through the armature of Figures 1 to 4;
- Figure 6: shows a first side view of a detail of Figure 5;
- Figure 7: shows a second side view of the detail of Figures 5 and 6;
- Figure 8: shows a cross section through the detail of Figures 5 to 8;
- Figure 9: shows a top view of the detail of Figures 5 to 9; and
- Figure 10: shows a perspective view of Fig. 8.

The present application relates to an armature for a fluid system like a potable water system comprising an integrated fluid flow measuring device.

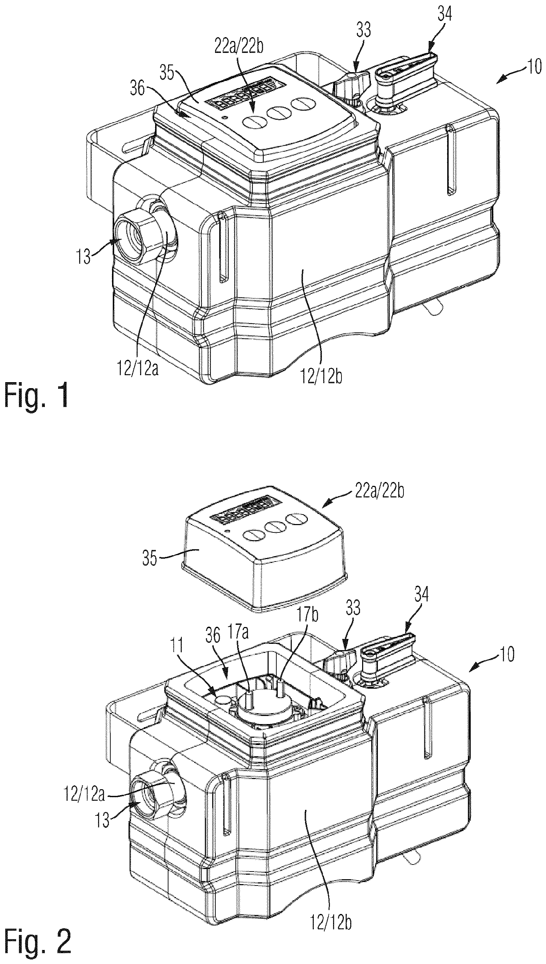

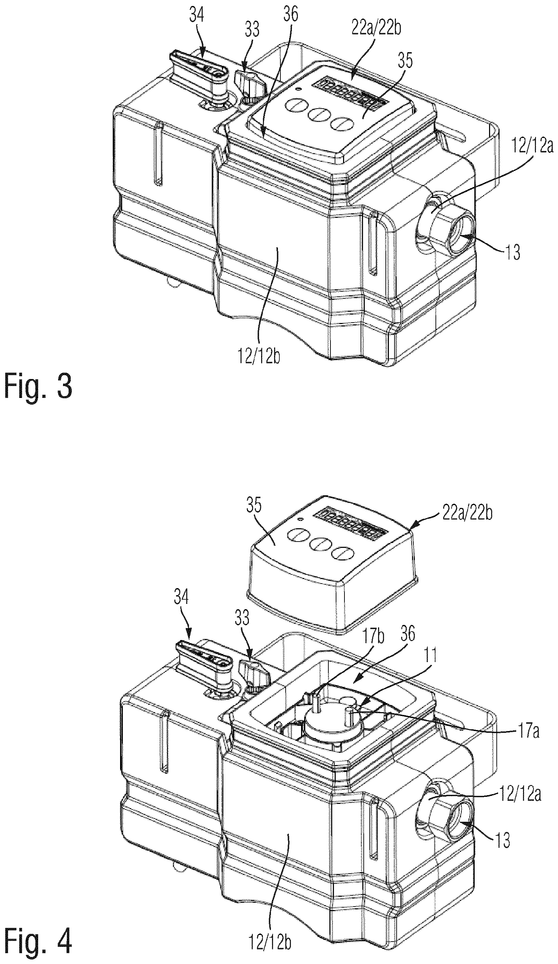

Figures 1 to 5 illustrate details of a water treatment armature 10 configured for the handling of water, especially for the handling of potable water, having as an integral element a fluid flow measuring device 11.

The water treatment armature 10 can be a water filter.

The water treatment armature 10 shown in Figures 1 to 5 is a water treatment armature configured to soften and/or demineralize water.

The water treatment armature 10 comprises a housing 12 that provides an inlet 13 for the fluid, an outlet 14 for the fluid being coaxial to the inlet 13, and a flow channel 15 for the fluid, wherein said flow channel 15 extends between the inlet 13 and the outlet 14.

The housing 12 has an inner housing part 12a preferably made from a metallic, non-ferromagnetic material like aluminum, brass, non-magnetic stainless steel, plastic and the like. The inner housing part 12a provides said inlet 13 for the fluid, said outlet 14 for the fluid and said flow channel 15 for the fluid.

The housing 12 further has an outer housing part 12b preferably made from a plastic material partially surrounding the inner housing part 12a.

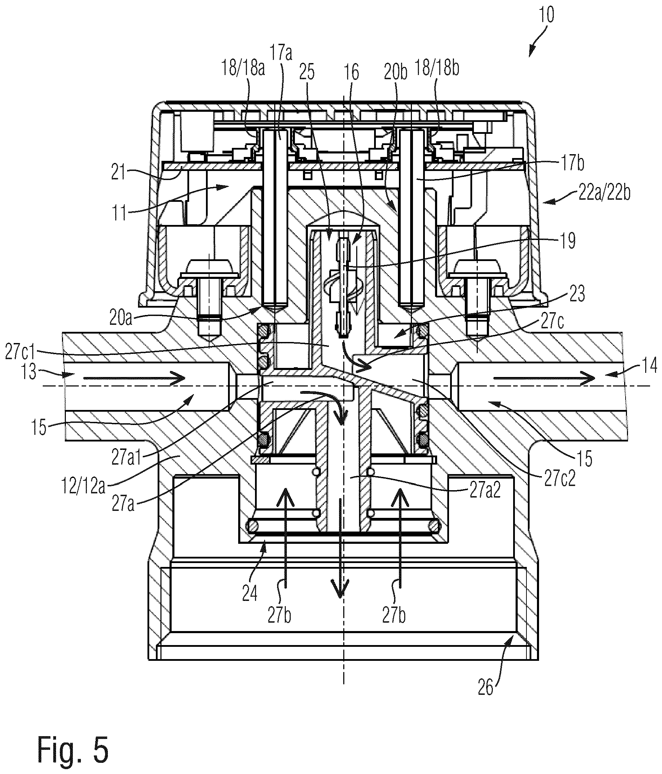

The water treatment armature 10 comprises further the fluid flow measuring device 11 which is an integral element of the armature 10. The fluid flow measuring device 11 comprises a rotatable, magnetic element 16 (see Figure 5). The rotatable, magnetic element 16 is positioned within the fluid flow or within a fluid flow channel 15. The rotation of the rotatable, magnetic element 16 depends from the fluid flow through the flow channel 15. The rotation of the rotatable, magnetic element 16 generates an alternating magnetic field. The rotatable, magnetic element 16 can be provided by magnetic turbine wheel or a paddle wheel having at least one pair of magnetic paddles.

The fluid flow measuring device 11 which is preferably an integral element of the armature 10 further comprises at least one sensing coil pair 18 having a first sensing coil 18a and a second sensing coil 18b. The sensing coils 18a, 18b of the sensing coil pair 18 are arranged in such a way that the magnetic field generated by the fluid flow dependent rotation of the rotatable element 16 has a first polarity and a first phase in the region of the respective first sensing coil 18a and a second polarity and a second phase in the region of the respective first sensing coil 18b, wherein at least said first and second phases and preferably in addition said first and second polarities differ from each other.

By using at least one such coil pair 18 with sensing coils 18a, 18b that make use of the magnetic field with different phases and preferably different polarities in the region of the sensing coils 18a, 18b of the coil pair 18, influence of noise caused by a disturbing magnetic field generated from electrical devices can be eliminated, especially when the source of the disturbing magnetic field has a distance from the sensing coils 18a, 18b being at least 5 times the distance between the sensing coils 18a, 18b. The first sensing coil 18a of sensing coil pair 18 is positioned around, namely wound around, a first ferromagnetic core 17a. The second sensing coil 18b of sensing coil pair 18 is positioned around, namely wound around, a second ferromagnetic core 17b.

A longitudinal axis of the first ferromagnetic core 17a which corresponds to a winding axis of the first sensing coil 18a around the first ferromagnetic core 17a runs parallel to a rotation axis 19 of the rotatable, magnetic element 16. A longitudinal axis of the second ferromagnetic core 17b which corresponds to a winding axis of the first sensing coil 18b around the first ferromagnetic core 17b runs also parallel to the rotation axis 19 of the rotatable, magnetic element 16 and therefore parallel to the longitudinal axis of the first ferromagnetic core 17a.

Said first ferromagnetic core 17a guides the magnetic field generated by the rotation of the rotatable element 16 with the first polarity and the first phase to the first sensing coil 18a of sensing coil pair 18. Said second ferromagnetic core 17b guides the magnetic field generated by the rotation of the rotatable element 16 with the second polarity and the second phase to the second sensing coil 18b of sensing coil pair 18. The first ferromagnetic core 17a is positioned at a first circumferential position of the rotatable, magnetic element 16. The second ferromagnetic core 17b is positioned at a second, different circumferential position of the rotatable, magnetic element 16. An angle between said first circumferential position and said second circumferential position is preferably 180°. The longitudinal axis of the respective first ferromagnetic core 17a has a first distance from the rotation axis 19 of the rotatable element 16. The longitudinal axis of the second ferromagnetic core 17b has a second distance from the rotation axis 19 of the rotatable element 16. Said first distance and said second distance are preferably identical.

The ferromagnetic cores 17a, 17b of the fluid flow measuring device 11 are positioned within recesses 20a, 20b of the armature housing 12, namely of the inner housing part 12a, outside of the flow channel 15 and thereby outside the fluid flow. The sensing coils 18a, 18b of the fluid flow measuring device 11 are positioned on a printed circuit board 21 outside the inner housing part 12a, preferably within a control unit 22a of the armature having a user interface 22b.

The sensing coils 18a, 18b of the sensing coil pair 18 are preferably connected in series to provide a subtraction of their signals thereby eliminating a noise signal. Other electrical components for processing the electrical current signals of the sensing coils 18a, 18b may be provided on the printed circuit board 21.

The water treatment armature 10 comprises further a monobloc or monolithic fluid flow guiding insert 23 configured to guide the fluid flow along the rotatable, magnetic element 16 of the fluid flow measuring device 11, wherein the fluid flow guiding insert 23 is positioned within a recess 24 of the housing 12, namely within the recess 24 provided by the inner housing part 12a, and wherein the rotatable, magnetic element 16 of the fluid flow measuring device 11 is positioned within a recess 25 of the fluid flow guiding insert 23. The recess 24 of the housing 12 that accommodates the monobloc fluid flow guiding insert 23 is preferably cylindrical and has a longitudinal axis running perpendicular to the inlet 13 and outlet 14 of the housing 12. The water treatment armature comprises an element like a water treatment cartridge (not shown) connected between the inlet 13 and the outlet 14 of the inner housing part 12a of the housing 12. Figure 5 shows a section 26 of the inner housing part 12a configured to receive such a water treatment element.

The fluid flow guiding insert 23 is configured to guide the fluid flow from the inlet 13 of the housing 12 towards the water treatment element (not shown), then from the water treatment element towards the rotatable, magnetic element 16 of the fluid flow measuring device 11, and then from the rotatable, magnetic element 16 towards the outlet 14 of the housing 12. The fluid flow guiding insert 23 comprises a first flow channel section 27a configured to guide the fluid flow from the inlet 13 of the housing 12 towards the water treatment element; a second flow channel section 27b configured to guide the fluid flow from the water treatment element towards the rotatable, magnetic element 16 of the fluid flow measuring device 11; and a third flow channel section 27c configured to guide the fluid flow from the rotatable, magnetic element 16 of the fluid flow measuring device 11 towards the outlet 13 of the housing.

The fluid flows first to the water treatment element (not shown) and afterwards to the rotatable, magnetic element 16 of the fluid flow measuring device 11. So, the rotatable, magnetic element 16 of the fluid flow measuring device 11 comes in contact only with water treated by the water treatment element. This allows a very reliable fluid flow measurement. Further on, the life time of the rotatable, magnetic element 16 of the fluid flow measuring device 11 can be increased.

An upstream subsection 27a1 of the first flow channel section 27a receiving the water from the inlet 13 is coaxial with the inlet 13 of the housing 11. Said upstream subsection 27a1 of the first flow channel section 27a receives the water deflectionless from the inlet 13 of the housing 11. A downstream subsection 27a2 of the first flow channel section 27a guiding the water towards the water treatment element is perpendicular to said upstream subsection 27a1. Said downstream subsection 27a2 of the first flow channel section 27a receives the water with a 90 degrees deflection from the upstream subsection 27a1 of the first flow channel section 27a. The downstream subsection 27a2 of the first flow channel section 27a guides the water deflectionless to the water treatment element. The second flow channel section 27b runs parallel to the down-stream subsection 27a2 of the first flow channel section 27a. The second flow channel section 27b receives the water deflectionless from the water treatment element. An upstream subsection 27c1 of the third flow channel section 27c is coaxial with the downstream subsection 27a2 of the first flow channel section 27a. Said upstream subsection 27c1 of the third flow channel section 27c receives the water with a 180 degrees deflection from the second flow channel section 27b. A downstream subsection 27c2 of the third flow channel section 27c guiding the water towards the outlet 14 is coaxial with the outlet 14. Said downstream subsection 27c2 of the third flow channel section 27c receives the water with a 90 degrees deflection from the upstream subsection 27c1 of the third flow channel section 27a. The outlet 14 of the housing 11 receives the water deflectionless from the downstream subsection 27c2 of the third flow channel section 27c.

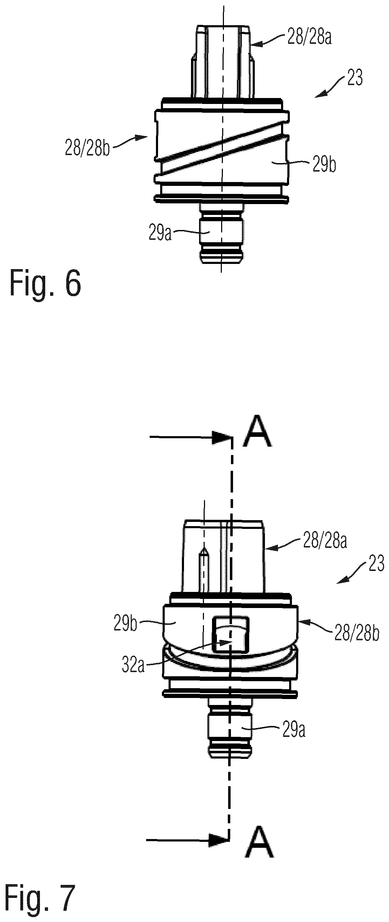

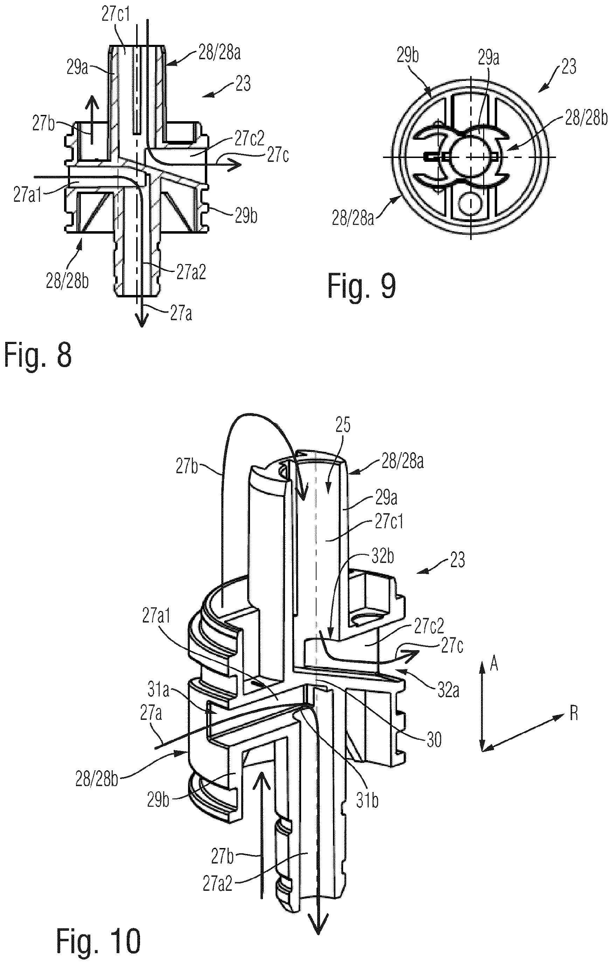

Further details of the fluid flow guiding insert 23 will now be described with reference to Figures 6 to 10.

The fluid flow guiding insert 23 comprises a body 28 having a first tube-like body section 28a with a radial inner wall 29a and a second tube-like body section 28b with a radial outer wall 29b. The radial outer wall 29b of the second tube-like body section 28b is positioned concentrically around the radial inner wall 29a of the first tube-like body section 28a. Further, the radial inner wall 29a of the first tube-like body section 28a protrudes in axial direction the radial outer wall 29b of the second tube-like body section 28b on both axial ends of the second tube-like body section 28b.

The upstream subsection 27a1 of first flow channel section 27a of the fluid flow guiding insert 23 extends in radial direction R through the radial outer wall 29b of the second tube-like body section 28a and through the radial inner wall 29a of the first tube-like body section 28b.

The downstream subsection 27a2 of the first flow channel section 27a extends in axial direction A inwardly from the radial inner wall 29a of the first tube-like body section 28a. The radial outer wall 29b of the second tube-like body section 28b and the radial inner wall 29a of the first tube-like body section 28a comprise corresponding openings 31a, 31b allowing said fluid flow.

The second flow channel section 27b of the fluid flow guiding insert 23 extends in axial direction A, namely in axial direction A between the radial inner wall 29a of the first tube-like body section 28a and the radial outer wall 29b of the second tube-like body section 28b.

The upstream subsection 27c1 of the third flow channel section 27c extends in axial direction A inwardly from the radial inner wall 29a of the first tube-like body section 28a.

The downstream subsection 27c2 of the third flow channel section 27c extends in radial direction R through the radial inner wall 29a of the first tube-like body section 28a and through the radial outer wall 29b of the second tube-like body section 28b. The radial outer wall 29b of the second tube-like body section 28b and the radial inner wall 29a of the first tube-like body section 28a comprise corresponding openings 32a, 32b allowing said fluid flow.

The radial inner wall 29a of the first tube-like body section 28a and the radial outer wall 29b a second tube-like body section 28b are both cylindrically shaped. The radial inner wall 29a of the first tube-like body section 28a and the radial outer wall 29b a second tube-like body section 28b are both open at their axial ends allowing a fluid flow in axial direction through the first tube-like body section 28a and through the second tube-like body section 28b.

The downstream subsection 27a2 of the first flow channel section 27a that extends in axial direction A and the upstream subsection 27c1 of the third flow channel section 27c that extends in axial direction A are coaxially aligned in axial direction and are separated by a separating wall 30 of the fluid flow guiding insert 23.

Further on, the upstream subsection 27a1 of the first flow channel section 27a that extends in radial direction R and the downstream subsection 27c2 of the third flow channel section 27 that extends in radial direction R are coaxially aligned in radial direction and separated by said separating wall 30 of the fluid flow guiding insert 23.

Said separating wall 30 is posited in the middle of the fluid flow guiding insert 23 between the opposing axial ends of the fluid flow guiding insert 23.

The upstream subsection 27c1 of the third flow channel section 27c provides the recess 25 of the fluid flow guiding insert 23 in which the rotatable, magnetic element 16 of the fluid flow measuring device 11 is positioned.

The rotatable, magnetic element 16 of the fluid flow measuring device 11 is positioned inwardly from the radial inner wall 29a of the first tube-like body section 28a of the fluid flow guiding insert 23, namely within the upstream subsection 27c1 of the third flow channel section 27c extending in axial direction. So, the recess 25 of the fluid flow guiding insert 23 in which the rotatable, magnetic element 16 of the fluid flow measuring device 11 is positioned is provided by the third flow channel section 27c, namely by the upstream subsection 27c1 of the third flow channel section 27c that extends in axial direction A.

In an assembled status of the water treatment armature 10 with the armature 10 being connected into a fluid system the rotation axis 19 of the rotatable, magnetic element 16 of the fluid flow measuring device 11 that runs parallel to the axial direction A of the fluid flow guiding insert 23 and parallel to the ferromagnetic cores 17a, 17b of the the fluid flow measuring device 11 is vertically orientated.

According to Figures 1 to 4, the water treatment armature 10 comprises further an air bleeder valve 33 and a shut-off valve 34 connected in series and positions proximate to the outlet 14 of the armature 10.

As mentioned above, the armature 10 comprises a control unit 22a having a user interface 22b. The control unit 22a comprises a housing 35 that is positioned within a recess 36 of the outer housing part 12b of the housing 12.

The control unit 22a having the user interface 22b is removable mounted to the housing 12. The housing 35 of the control unit 22a / user interface 22b and the recess 36 of the housing part 12b are both configured so that the control unit 22a / user interface 22b is mountable to the housing 12 in a least two different orientations.

### List of reference signs

- 10: armature
- 11: fluid flow measuring device
- 12: housing
- 12a: inner housing part
- 12b: outer housing part
- 13: inlet
- 14: outlet
- 15: flow channel
- 16: rotatable, magnetic element
- 17a: ferromagnetic core
- 17b: ferromagnetic core
- 18: coil pair
- 18a: sensing coil
- 18b: sensing coil
- 19: rotation axis
- 20a: recess
- 20b: recess
- 21: printed circuit board
- 22a: control unit
- 22b: user interface
- 23: fluid flow guiding insert
- 24: recess
- 25: recess
- 26: section
- 27a: first flow channel section
- 27a1: upstream subsection
- 27a2: downstream subsection
- 27b: second flow channel section
- 27c: third flow channel section
- 27c1: upstream subsection
- 27c2: downstream subsection
- 28: body
- 28a: first tube-like body section
- 28b: second tube-like body section
- 29a: radial inner wall
- 29b: radial outer wall
- 30: separating wall
- 31a: opening
- 31b: opening
- 32a: opening
- 32b: opening
- 33: air bleeder valve
- 34: shut-off valve
- 35: housing
- 36: recess

## Claims

1. Water treatment armature (10) for the handling of water, comprising:
a housing (12) having an inlet (13) for the fluid, an outlet (14) for the fluid and a flow channel (15) for the fluid extending between the inlet (13) and the outlet (14),
a water treatment element connected between the inlet (13) and the outlet (14) of the housing (12),
a fluid flow measuring device (11) configured to measure the fluid flow through the flow channel (15), the fluid flow measuring device having
a rotatable, magnetic element (16), wherein the rotatable, magnetic element (16) is positioned in the fluid flow, wherein the rotation of the rotatable, magnetic element (16) depends from the fluid flow, and wherein the rotation of the rotatable, magnetic element (16) generates a magnetic field,
a fluid flow guiding insert (23) configured to guide the fluid flow along the rotatable, magnetic element (16) of the fluid flow measuring device (11),
wherein the fluid flow guiding insert (23) is positioned within a recess (24) of the housing (12),
wherein the rotatable, magnetic element (16) of the fluid flow measuring device (11) is positioned within a recess (25) of the fluid flow guiding insert (23),
**characterized in that**
the outlet (14) of the housing (12) is coaxial with the inlet (13) of the housing (12),
the fluid flow measuring device (11) has at least one sensing coil pair (18) having a first sensing coil (18a) and a second sensing coil (18b) sensing the magnetic field that depends from the fluid flow,
the fluid flow guiding insert (23) is monobloc,
the monobloc fluid flow guiding insert (23) is configured
to guide the fluid flow first from the inlet (13) of the housing (12) towards the water treatment element, namely by having a first flow channel section (27a) configured to guide the fluid flow from the inlet (13) of the housing (12) towards the water treatment element,
to guide the fluid flow then from the water treatment element towards the rotatable, magnetic element (16) of the fluid flow measuring device (11), namely by having a second flow channel section (27b) configured to guide the fluid flow from the water treatment element towards the rotatable, magnetic element (16) of the fluid flow measuring device (11), and
to guide the fluid flow then from the rotatable, magnetic element (16) towards the outlet (14) of the housing (12), namely by having a third flow channel section (27c) configured to guide the fluid flow from the rotatable, magnetic element (16) of the fluid flow measuring device (11) towards the outlet (13) of the housing (12).

2. Water treatment armature (10) of claim 1, **characterized in that**
an upstream subsection (27a1) of the first flow channel section (27a) receiving the water from the inlet (13) is coaxial with the inlet (13) of the housing (11), and a downstream subsection (27a2) of the first flow channel section (27a) guiding the water towards the water treatment element is perpendicular to said upstream subsection (27a1);
the second flow channel section (27b) runs parallel to the down-stream subsection (27a2) of the first flow channel section (27a);
an upstream subsection (27c1) of the third flow channel section (27c) is coaxial with the downstream subsection (27a2) of the first flow channel section (27a), and a downstream subsection (27c2) of the third flow channel section (27c) guiding the water towards the outlet (14) is coaxial with the outlet (14).

3. Water treatment armature (10) of claim 2, **characterized in that** the upstream subsection (27c1) of the third flow channel section (27c) provides the recess (25) of the fluid flow guiding insert (23) in which the rotatable, magnetic element (16) of the fluid flow measuring device (11) is positioned.

4. Water treatment armature (10) of claim 2 or 3, **characterized in that**
the upstream subsection (27a1) of the first flow channel section (27a) receives the water deflectionless from the inlet (13) of the housing (11),
the downstream subsection (27a2) of the first flow channel section (27a) receives the water with a 90 degrees deflection from the upstream subsection (27a1) of the first flow channel section (27a),
the downstream subsection (27a2) guides the water to the water treatment element;
the second flow channel section (27b) receives the water from the water treatment element,
the upstream subsection (27c1) of the third flow channel section (27c) receives the water with a 180 degrees deflection from the second flow channel section (27b),
the downstream subsection (27c2) of the third flow channel section (27c) receives the water with a 90 degrees deflection from the upstream subsection (27c1) of the third flow channel section (27c),
the outlet (14) of the housing (11) receives the water deflectionless from the downstream subsection (27c2) of the third flow channel section (27c).

5. Water treatment armature (10) of claim 2-4, **characterized in that** the fluid flow guiding insert (23) comprises a body (28) having a first tube-like body section (28a) with a radial inner wall (29a) and a second tube-like body section (28b) with a radial outer wall (29b), wherein
the upstream subsection (27a1) of the first flow channel section (27a) extends in radial direction through the radial outer wall (29b) of the second tube-like body section (28b) and through the radial inner wall (29a) of the first tube-like body section (28a),
the downstream subsection (27a2) of the first flow channel section (27a) extends in axial direction inwardly from the radial inner wall (29a) of the first tube-like body section (28a),
the second flow channel section (27b) extends in axial direction, namely in axial direction between the radial inner wall (29a) of the first tube-like body section (28a) and the radial outer wall (29b) of the second tube-like body section (28b),
the upstream subsection (27c1) of the third flow channel section (27c) extends in axial direction inwardly from the radial inner wall (29a) of the first tube-like body section (28a), and
the downstream subsection (27c2) of the third flow channel section (27c) extends in radial direction through the radial inner wall (29a) of the first tube-like body section (28a) and through the radial outer wall (29b) of the second tube-like body section (28b).

6. Water treatment armature (10) of one of claims 2-5, **characterized in that** the downstream subsection (27a2) of the first flow channel section (27a) and the upstream subsection (27c1) of the third flow channel section (27c) are coaxial in axial direction of the the monobloc fluid flow guiding insert (23) and are separated by a separating wall (30) of the fluid flow guiding insert (23).

7. Water treatment armature (10) of one of claims 2-6, **characterized in that** the upstream subsection (27a1) of the first flow channel section (27a) and a downstream subsection (27c2) of the third flow channel section (27c) are coaxial in radial direction of the the monobloc fluid flow guiding insert (23) and are separated by a separating wall (30) of the fluid flow guiding insert (23).

8. Water treatment armature (10) of claim 6 or 7, **characterized in that** the separating wall (30) that separates the downstream subsection (27a2) of the first flow channel section (27a) and the upstream subsection (27c1) of third flow channel section (27c) both extending in axial direction separates also the upstream subsection (27a1) of the first flow channel section (27a) and the downstream subsection (27c2) of the third flow channel section (27c) both extending in radial direction.

9. Water treatment armature (10) of one of claims 5-8, **characterized in that** the rotatable, magnetic element (16) of the fluid flow measuring device (11) is positioned inwardly from the radial inner wall (29a) of the first tube-like body section (28a) of the fluid flow guiding insert (23).

10. Water treatment armature (10) of one of claims 5-9, **characterized in that** the radial outer wall (29b) of the second tube-like body section (28b) is positioned concentrically around the radial inner wall (29a) of the first tube-like body section (28a).

11. Water treatment armature (10) of one of claims 5-10, **characterized in that** the radial inner wall (29a) of the first tube-like body section (28a) protrudes in axial direction the radial outer wall (29b) of the second tube-like body section (28b) on both axial ends of the same.

12. Water treatment armature (10) of one of claims 1-11, **characterized in that** the recess (24) of the housing (12) that accommodates the monobloc fluid flow guiding insert (23) has an axis running perpendicular to the inlet (13) and outlet (14) of the housing (12).

13. Water treatment armature (10) of one of claims 1-12, **characterized by** a control unit (22a) comprising a user interface (22b) removable mounted to the housing (12), wherein a housing (35) of the control unit (22a) and a recess (36) the housing (12) receiving the control unit (22a) are both configured so that the control unit (22a) is mountable to the housing (12) in a least two different orientations.

## Patentansprüche

1. Wasseraufbereitungsarmatur (10) zur Behandlung von Wasser, die Folgendes umfasst:
ein Gehäuse (12), das einen Einlass (13) für das Fluid, einen Auslass (14) für das Fluid und einen Strömungskanal (15) für das Fluid, der sich zwischen dem Einlass (13) und dem Auslass (14) erstreckt, besitzt,
ein Wasseraufbereitungselement, das zwischen dem Einlass (13) und dem Auslass (14) des Gehäuses (12) angeschlossen ist,
eine Fluiddurchflussmessvorrichtung (11), die konfiguriert ist, den Fluiddurchfluss durch den Strömungskanal (15) zu messen, wobei die Fluiddurchflussmessvorrichtung
ein drehbares magnetisches Element (16) besitzt, wobei das drehbare magnetische Element (16) in dem Fluiddurchfluss positioniert ist, wobei die Drehung des drehbaren magnetischen Elements (16) von dem Fluiddurchfluss abhängt, und wobei die Drehung des drehbaren magnetischen Elements (16) ein magnetisches Feld erzeugt,
einen Fluiddurchflussleiteinsatz (23), der konfiguriert ist, den Fluiddurchfluss in einer Richtung des drehbaren magnetischen Elements (16) der Fluiddurchflussmessvorrichtung (11) zu leiten,
wobei der Fluiddurchflussleiteinsatz (23) in einer Aussparung (24) des Gehäuses (12) positioniert ist, und
wobei das drehbare magnetische Element (16) der Fluiddurchflussmessvorrichtung (11) in einer Aussparung (25) des Fluiddurchflussleiteinsatzes (23) positioniert ist,
**dadurch gekennzeichnet, dass**
der Auslass (14) des Gehäuses (12) koaxial zu dem Einlass (13) des Gehäuses (12) ist,
die Fluiddurchflussmessvorrichtung (11) mindestens ein Erfassungsspulenpaar (18) besitzt, das eine erste Erfassungsspule (18a) und eine zweite Erfassungsspule (18b) besitzt, die das magnetische Feld erfassen, das von dem Fluiddurchfluss abhängt,
der Fluiddurchflussleiteinsatz (23) einteilig ist,
der einteilige Fluiddurchflussleiteinsatz (23) konfiguriert ist,
den Fluiddurchfluss zuerst von dem Einlass (13) des Gehäuses (12) zu dem Wasseraufbereitungselement zu leiten, und zwar durch Aufweisen eines ersten Strömungskanalabschnitts (27a), der konfiguriert ist, dass der Fluiddurchfluss von dem Einlass (13) des Gehäuses (12) zu dem Wasseraufbereitungselement geleitet wird,
den Fluiddurchfluss dann von dem Wasseraufbereitungselement zu dem drehbaren magnetischen Element (16) der Fluiddurchflussmessvorrichtung (11) zu leiten, und zwar durch Aufweisen eines zweiten Strömungskanalabschnitts (27b), der konfiguriert ist, dass der Fluiddurchfluss von dem Wasseraufbereitungselement zu dem drehbaren magnetischen Element (16) der Fluiddurchflussmessvorrichtung (11) geleitet wird, und
den Fluiddurchfluss dann von dem drehbaren magnetischen Element (16) zu dem Auslass (14) des Gehäuses (12) zu leiten, und zwar durch Aufweisen eines dritten Strömungskanalabschnitts (27c), der konfiguriert ist, dass der Fluiddurchfluss von dem drehbaren magnetischen Element (16) der Fluiddurchflussmessvorrichtung (11) zu dem Auslass (13) des Gehäuses (12) geleitet wird.

2. Wasseraufbereitungsarmatur (10) nach Anspruch 1, **dadurch gekennzeichnet, dass**
ein stromaufwärts gelegener Teilabschnitt (27a1) des ersten Strömungskanalabschnitts (27a), der das Wasser von dem Einlass (13) empfängt, koaxial zu dem Einlass (13) des Gehäuses (11) ist und ein stromabwärts gelegener Teilabschnitt (27a2) des ersten Strömungskanalabschnitts (27a), der das Wasser zu dem Wasseraufbereitungselement leitet, senkrecht zu dem stromaufwärts gelegenen Teilabschnitt (27a1) ist;
der zweite Strömungskanalabschnitt (27b) parallel zu dem stromabwärts gelegenen Teilabschnitt (27a2) des ersten Strömungskanalabschnitts (27a) verläuft;
ein stromaufwärts gelegener Teilabschnitt (27c1) des dritten Strömungskanalabschnitts (27c) koaxial zu dem stromabwärts gelegenen Teilabschnitts (27a2) des ersten Strömungskanalabschnitts (27a) ist, und ein stromabwärts gelegener Teilabschnitt (27c2) des dritten Strömungskanalabschnitts (27c), der das Wasser zu dem Auslass (14) leitet, koaxial zu dem Auslass (14) ist.

3. Wasseraufbereitungsarmatur (10) nach Anspruch 2, **dadurch gekennzeichnet, dass** der stromaufwärts gelegene Teilabschnitt (27c1) des dritten Strömungskanalabschnitts (27c) die Aussparung (25) des Fluiddurchflussleiteinsatzes (23) bereitstellt, in der das drehbare magnetische Element (16) der Fluiddurchflussmessvorrichtung (11) positioniert ist.

4. Wasseraufbereitungsarmatur (10) nach Anspruch 2 oder 3, **dadurch gekennzeichnet, dass**
der stromaufwärts gelegene Teilabschnitt (27a1) des ersten Strömungskanalabschnitts (27a) das Wasser ohne Ablenkung von dem Einlass (13) des Gehäuses (11) empfängt,
der stromabwärts gelegene Teilabschnitt (27a2) des ersten Strömungskanalabschnitts (27a) das Wasser mit einer Ablenkung um 90 Grad von dem stromaufwärts gelegenen Teilabschnitt (27a1) des ersten Strömungskanalabschnitts (27a) empfängt,
der stromabwärts gelegene Teilabschnitt (27a2) das Wasser zu dem Wasseraufbereitungselement leitet;
der zweite Strömungskanalabschnitt (27b) das Wasser von dem Wasseraufbereitungselement empfängt,
der stromaufwärts gelegene Teilabschnitt (27c1) des dritten Strömungskanalabschnitts (27c) das Wasser mit einer Ablenkung um 180 Grad von dem zweiten Strömungskanalabschnitt (27b) empfängt,
der stromabwärts gelegene Teilabschnitt (27c2) des dritten Strömungskanalabschnittes (27c) das Wasser mit einer Ablenkung um 90 Grad von dem stromaufwärts gelegenen Teilabschnitts (27c1) des dritten Strömungskanalabschnitts (27c) empfängt,
der Auslass (14) des Gehäuses (11) das Wasser ohne Ablenkung von dem stromabwärts gelegenen Teilabschnitt (27c2) des dritten Strömungskanalabschnitts (27c) empfängt.

5. Wasseraufbereitungsarmatur (10) nach Anspruch 2 bis 4, **dadurch gekennzeichnet, dass** der Fluiddurchflussleiteinsatz (23) einen Körper (28) umfasst, der einen ersten rohrartigen Körperabschnitt (28a) mit einer radialen Innenwand (29a) und einen zweiten rohrartigen Körperabschnitt (28b) mit einer radialen Außenwand (29b) besitzt, wobei sich
der stromaufwärts gelegene Teilabschnitt (27a1) des ersten Strömungskanalabschnitts (27a) in radialer Richtung durch die radiale Außenwand (29b) des zweiten rohrartigen Körperabschnitts (28b) und durch die radiale Innenwand (29a) des ersten rohrartigen Körperabschnitts (28a) erstreckt,
der stromabwärts gelegene Teilabschnitt (27a2) des ersten Strömungskanalabschnitts (27a) in axialer Richtung von der radialen Innenwand (29a) des ersten rohrartigen Körperabschnitts (28a) nach innen erstreckt,
der zweite Strömungskanalabschnitt (27b) in axialer Richtung, und zwar in axialer Richtung zwischen der radialen Innenwand (29a) des ersten rohrartigen Körperabschnitts (28a) und der radialen Außenwand (29b) des zweiten rohrartigen Körperabschnitts (28b) erstreckt,
der stromaufwärts gelegene Teilabschnitt (27c1) des dritten Strömungskanalabschnitts (27c) in axialer Richtung von der radialen Innenwand (29a) des ersten rohrartigen Körperabschnitts (28a) nach innen erstreckt, und
der stromabwärts gelegene Teilabschnitt (27c2) des dritten Strömungskanalabschnitts (27c) in radialer Richtung durch die radiale Innenwand (29a) des ersten rohrartigen Körperabschnitts (28a) und durch die radiale Außenwand (29b) des zweiten rohrartigen Körperabschnitts (28b) erstreckt.

6. Wasseraufbereitungsarmatur (10) nach einem der Ansprüche 2 bis 5, **dadurch gekennzeichnet, dass** der stromabwärts gelegene Teilabschnitt (27a2) des ersten Strömungskanalabschnitts (27a) und der stromaufwärts gelegene Teilabschnitt (27c1) des dritten Strömungskanalteilabschnitts (27c) koaxial in einer axialen Richtung des einteiligen Fluiddurchflussleiteinsatzes (23) sind und durch eine Trennwand (30) des Fluiddurchflussleiteinsatzes (23) getrennt sind.

7. Wasseraufbereitungsarmatur (10) nach einem der Ansprüche 2 bis 6, **dadurch gekennzeichnet, dass** der stromaufwärts gelegene Teilabschnitt (27a1) des ersten Strömungskanalabschnitts (27a) und ein stromabwärts gelegener Teilabschnitt (27c2) des dritten Strömungskanalabschnitts (27c) koaxial in einer radialen Richtung des einteiligen Fluiddurchflussleiteinsatzes (23) sind und durch eine Trennwand (30) des Fluiddurchflussleiteinsatzes (23) getrennt sind.

8. Wasseraufbereitungsarmatur (10) nach Anspruch 6 oder 7, **dadurch gekennzeichnet, dass** die Trennwand (30), die den stromabwärts gelegenen Teilabschnitt (27a2) des ersten Strömungskanalabschnitts (27a) und den stromaufwärts gelegenen Teilabschnitt (27c1) des dritten Strömungskanalabschnitts (27c), die sich beide in axialer Richtung erstrecken, trennt, auch den stromaufwärts gelegenen Teilabschnitt (27a1) des ersten Strömungskanalabschnitts (27a) und den stromabwärts gelegenen Abschnitt (27c2) des dritten Strömungskanalabschnitts (27c), die sich beide in radialer Richtung erstrecken, trennt.

9. Wasseraufbereitungsarmatur (10) nach einem der Ansprüche 5 bis 8, **dadurch gekennzeichnet, dass** das drehbare magnetische Element (16) der Fluiddurchflussmessvorrichtung (11) innerhalb der radialen Innenwand (29a) des ersten rohrartigen Körperabschnitts (28a) des Fluiddurchflussleiteinsatzes (23) positioniert ist.

10. Wasseraufbereitungsarmatur (10) nach einem der Ansprüche 5 bis 9, **dadurch gekennzeichnet, dass** die radiale Außenwand (29b) des zweiten rohrartigen Körperabschnitts (28b) konzentrisch um die radiale Innenwand (29a) des ersten rohrartigen Körperabschnitts (28a) positioniert ist.

11. Wasseraufbereitungsarmatur (10) nach einem der Ansprüche 5 bis 10, **dadurch gekennzeichnet, dass** die radiale Innenwand (29a) des ersten rohrartigen Körperabschnitts (28a) in axialer Richtung aus der radialen Außenwand (29b) des zweiten rohrartigen Körperabschnitts (28b) an dessen beiden axialen Enden vorsteht.

12. Wasseraufbereitungsarmatur (10) nach einem der Ansprüche 1 bis 11, **dadurch gekennzeichnet, dass** die Aussparung (24) des Gehäuses (12), die den einteiligen Fluiddurchflussleiteinsatz (23) aufnimmt, eine Achse besitzt, die senkrecht zu dem Einlass (13) und dem Auslass (14) des Gehäuses (12) verläuft.

13. Wasseraufbereitungsarmatur (10) nach einem der Ansprüche 1 bis 12, **gekennzeichnet durch** eine Steuereinheit (22a), die eine Anwenderschnittstelle (22b) umfasst, die abnehmbar an dem Gehäuse (12) angebracht ist, wobei ein Gehäuse (35) der Steuereinheit (22a) und eine Aussparung (36) des Gehäuses (12), die die Steuereinheit (22a) aufnimmt, beide so konfiguriert sind, dass die Steuereinheit (22a) in mindestens zwei verschiedenen Ausrichtungen an dem Gehäuse (12) angebracht werden kann.

## Revendications

1. Robinetterie (10) de traitement d'eau destinée à la manipulation d'eau, comportant :
un boîtier (12) doté d'une entrée (13) pour le fluide, d'une sortie (14) pour le fluide et d'un conduit (15) d'écoulement pour le fluide s'étendant entre l'entrée (13) et la sortie (14),
un élément de traitement d'eau raccordé entre l'entrée (13) et la sortie (14) du boîtier (12),
un dispositif (11) de mesure de débit de fluide configuré pour mesurer le débit de fluide à travers le conduit (15) d'écoulement, le dispositif de mesure de débit de fluide comprenant
un élément magnétique tournant (16), l'élément magnétique tournant (16) étant positionné dans l'écoulement de fluide, la rotation de l'élément magnétique tournant (16) dépendant du débit de fluide, et la rotation de l'élément magnétique tournant (16) générant un champ magnétique,
un insert (23) de guidage d'écoulement de fluide configuré pour guider l'écoulement de fluide le long de l'élément magnétique tournant (16) du dispositif (11) de mesure de débit de fluide,
l'insert (23) de guidage d'écoulement de fluide étant positionné à l'intérieur d'un évidement (24) du boîtier (12),
l'élément magnétique tournant (16) du dispositif (11) de mesure de débit de fluide étant positionné à l'intérieur d'un évidement (25) de l'insert (23) de guidage d'écoulement de fluide,
**caractérisée en ce que**
la sortie (14) du boîtier (12) est coaxiale avec l'entrée (13) du boîtier (12),
le dispositif (11) de mesure de débit de fluide est doté d'au moins une paire (18) de bobines de détection comprenant une première bobine (18a) de détection et une deuxième bobine (18b) de détection détectant le champ magnétique qui dépend du débit de fluide,
l'insert (23) de guidage d'écoulement de fluide est monobloc,
l'insert monobloc (23) de guidage d'écoulement de fluide est configuré
pour guider l'écoulement de fluide d'abord de l'entrée (13) du boîtier (12) vers l'élément de traitement d'eau, à savoir en comprenant un premier tronçon (27a) de conduit d'écoulement configuré pour guider l'écoulement de fluide de l'entrée (13) du boîtier (12) vers l'élément de traitement d'eau,
pour guider ensuite l'écoulement de fluide de l'élément de traitement d'eau vers l'élément magnétique tournant (16) du dispositif (11) de mesure de débit de fluide, à savoir en comprenant un deuxième tronçon (27b) de conduit d'écoulement configuré pour guider l'écoulement de fluide de l'élément de traitement d'eau vers l'élément magnétique tournant (16) du dispositif (11) de mesure de débit de fluide, et
pour guider ensuite l'écoulement de fluide de l'élément magnétique tournant (16) vers la sortie (14) du boîtier (12), à savoir en comprenant un troisième tronçon (27c) de conduit d'écoulement configuré pour guider l'écoulement de fluide de l'élément magnétique tournant (16) du dispositif (11) de mesure de débit de fluide vers la sortie (13) du boîtier (12).

2. Robinetterie (10) de traitement d'eau de claim 1, **caractérisée en ce que**
un sous-tronçon amont (27a1) du premier tronçon (27a) de conduit d'écoulement recevant l'eau provenant de l'entrée (13) est coaxial avec l'entrée (13) du boîtier (11), et un sous-tronçon aval (27a2) du premier tronçon (27a) de conduit d'écoulement guidant l'eau vers l'élément de traitement d'eau est perpendiculaire audit sous-tronçon amont (27a1) ;
le deuxième tronçon (27b) de conduit d'écoulement passe parallèlement au sous-tronçon aval (27a2) du premier tronçon (27a) de conduit d'écoulement ;
un sous-tronçon amont (27c1) du troisième tronçon (27c) de conduit d'écoulement est coaxial avec le sous-tronçon aval (27a2) du premier tronçon (27a) de conduit d'écoulement, et un sous-tronçon aval (27c2) du troisième tronçon (27c) de conduit d'écoulement guidant l'eau vers la sortie (14) est coaxial avec la sortie (14) .

3. Robinetterie (10) de traitement d'eau de claim 2, **caractérisée en ce que** le sous-tronçon amont (27c1) du troisième tronçon (27c) de conduit d'écoulement ménage l'évidement (25) de l'insert (23) de guidage d'écoulement de fluide dans lequel est positionné l'élément magnétique tournant (16) du dispositif (11) de mesure de débit de fluide.

4. Robinetterie (10) de traitement d'eau de claim 2 ou 3, **caractérisée en ce que**
le sous-tronçon amont (27a1) du premier tronçon (27a) de conduit d'écoulement reçoit l'eau sans déviation en provenance de l'entrée (13) du boîtier (11),
le sous-tronçon aval (27a2) du premier tronçon (27a) de conduit d'écoulement reçoit l'eau avec une déviation de 90 degrés en provenance du sous-tronçon amont (27a1) du premier tronçon (27a) de conduit d'écoulement,
le sous-tronçon aval (27a2) guide l'eau jusqu'à l'élément de traitement d'eau ;
le deuxième tronçon (27b) de conduit d'écoulement reçoit l'eau en provenance de l'élément de traitement d'eau,
le sous-tronçon amont (27c1) du troisième tronçon (27c) de conduit d'écoulement reçoit l'eau avec une déviation de 180 degrés en provenance du deuxième tronçon (27b) de conduit d'écoulement,
le sous-tronçon aval (27c2) du troisième tronçon (27c) de conduit d'écoulement reçoit l'eau avec une déviation de 90 degrés en provenance du sous-tronçon amont (27c1) du troisième tronçon (27c) de conduit d'écoulement,
la sortie (14) du boîtier (11) reçoit l'eau sans déviation en provenance du sous-tronçon aval (27c2) du troisième tronçon (27c) de conduit d'écoulement.

5. Robinetterie (10) de traitement d'eau de claim 2-4, **caractérisée en ce que** l'insert (23) de guidage d'écoulement de fluide comporte un corps (28) doté d'un premier tronçon (28a) de corps semblable à un tube présentant une paroi intérieure radiale (29a) et d'un deuxième tronçon (28b) de corps semblable à un tube présentant une paroi extérieure radiale (29b),
le sous-tronçon amont (27a1) du premier tronçon (27a) de conduit d'écoulement s'étendant dans la direction radiale à travers la paroi extérieure radiale (29b) du deuxième tronçon (28b) de corps semblable à un tube et à travers la paroi intérieure radiale (29a) du premier tronçon (28a) de corps semblable à un tube,
le sous-tronçon aval (27a2) du premier tronçon (27a) de conduit d'écoulement s'étendant dans la direction axiale intérieurement à la paroi intérieure radiale (29a) du premier tronçon (28a) de corps semblable à un tube,
le deuxième tronçon (27b) de conduit d'écoulement s'étendant dans la direction axiale, à savoir dans la direction axiale entre la paroi intérieure radiale (29a) du premier tronçon (28a) de corps semblable à un tube et la paroi extérieure radiale (29b) du deuxième tronçon (28b) de corps semblable à un tube,
le sous-tronçon amont (27c1) du troisième tronçon (27c) de conduit d'écoulement s'étendant dans la direction axiale intérieurement à la paroi intérieure radiale (29a) du premier tronçon (28a) de corps semblable à un tube, et
le sous-tronçon aval (27c2) du troisième tronçon (27c) de conduit d'écoulement s'étendant dans la direction radiale à travers la paroi intérieure radiale (29a) du premier tronçon (28a) de corps semblable à un tube et à travers la paroi extérieure radiale (29b) du deuxième tronçon (28b) de corps semblable à un tube.

6. Robinetterie (10) de traitement d'eau selon l'une des revendications 2 à 5, **caractérisée en ce que** le sous-tronçon aval (27a2) du premier tronçon (27a) de conduit d'écoulement et le sous-tronçon amont (27c1) du troisième tronçon (27c) de conduit d'écoulement sont coaxiaux dans la direction axiale de l'insert monobloc (23) de guidage d'écoulement de fluide et sont séparés par une paroi séparatrice (30) de l'insert (23) de guidage d'écoulement de fluide.

7. Robinetterie (10) de traitement d'eau selon l'une des revendications 2 à 6, **caractérisée en ce que** le sous-tronçon amont (27a1) du premier tronçon (27a) de conduit d'écoulement et un sous-tronçon aval (27c2) du troisième tronçon (27c) de conduit d'écoulement sont coaxiaux dans la direction radiale de l'insert monobloc (23) de guidage d'écoulement de fluide et sont séparés par une paroi séparatrice (30) de l'insert (23) de guidage d'écoulement de fluide.

8. Robinetterie (10) de traitement d'eau de claim 6 ou 7, **caractérisée en ce que** la paroi séparatrice (30) qui sépare le sous-tronçon aval (27a2) du premier tronçon (27a) de conduit d'écoulement et le sous-tronçon amont (27c1) du troisième tronçon (27c) de conduit d'écoulement s'étendant tous deux dans la direction axiale sépare également le sous-tronçon amont (27a1) du premier tronçon (27a) de conduit d'écoulement et le sous-tronçon aval (27c2) du troisième tronçon (27c) de conduit d'écoulement s'étendant tous deux dans la direction radiale.

9. Robinetterie (10) de traitement d'eau selon l'une des revendications 5 à 8, **caractérisée en ce que** l'élément magnétique tournant (16) du dispositif (11) de mesure de débit de fluide est positionné intérieurement à la paroi intérieure radiale (29a) du premier tronçon (28a) de corps semblable à un tube de l'insert (23) de guidage d'écoulement de fluide.

10. Robinetterie (10) de traitement d'eau selon l'une des revendications 5 à 9, **caractérisée en ce que** la paroi extérieure radiale (29b) du deuxième tronçon (28b) de corps semblable à un tube est positionnée concentriquement autour de la paroi intérieure radiale (29a) du premier tronçon (28a) de corps semblable à un tube.

11. Robinetterie (10) de traitement d'eau selon l'une des revendications 5 à 10, **caractérisée en ce que** la paroi intérieure radiale (29a) du premier tronçon (28a) de corps semblable à un tube dépasse dans la direction axiale la paroi extérieure radiale (29b) du deuxième tronçon (28b) de corps semblable à un tube aux deux extrémités axiales de celui-ci.

12. Robinetterie (10) de traitement d'eau selon l'une des revendications 1 à 11, **caractérisée en ce que** l'évidement (24) du boîtier (12) qui reçoit l'insert monobloc (23) de guidage d'écoulement de fluide présente un axe qui est perpendiculaire à l'entrée (13) et à la sortie (14) du boîtier (12).

13. Robinetterie (10) de traitement d'eau selon l'une des revendications 1 à 12, **caractérisée par** une unité (22a) de commande comportant une interface (22b) d'utilisateur montée de façon amovible sur le boîtier (12), un boîtier (35) de l'unité (22a) de commande et un évidement (36) du boîtier (12) recevant l'unité (22a) de commande étant tous deux configurés de telle manière que l'unité (22a) de commande puisse être montée sur le boîtier (12) dans au moins deux orientations différentes.
